# FASCICULE DE BREVET EUROPEEN

(11) **EP 2 303 950 B1**
(45) Date de publication et mention de la délivrance du brevet: **02.11.2016**
(21) Numéro de dépôt: 09744440.0
(22) Date de dépôt: 10.06.2009
(51) Int. Cl.: C08J 3/07, C04B 26/22, C08L 57/02, C08L 7/02, C08L 9/08, C08L 91/00, C08L 93/04, C08L 95/00, E01C 7/30

(54) **EMULSION DE LIANT SYNTHETIQUE CLAIR**
EMULSION EINES KLAREN SYNTHETISCHEN BINDEMITTELS
CLEAR SYNTHETIC BINDER EMULSION

(30) Priorité: 12.06.2008 FR 0803265
(43) Date de publication de la demande: 06.04.2011
(73) Titulaire: TOTAL MARKETING SERVICES, 92800 Puteaux (FR)
(72) Inventeur: GODIVIER, Charlotte, F-92240 Malakoff (FR); MARIOTTI, Sophie, 69002 Lyon (FR); HERAULT, Joël, F-69440 Saint Sorlin (FR); MERLUZZI, Audrey, F-69520 Grigny (FR)
(74) Mandataire: Hirsch & Associés
(86) Numéro de dépôt international: PCT/IB2009/005905
(87) Numéro de publication internationale: WO 2009/150519

(56) Documents cités:
- EP-A- 0 179 510
- EP-A- 0 304 767
- EP-A- 1 466 878

## Description

### DOMAINE TECHNIQUE

La présente invention concerne de nouvelles émulsions aqueuses de liant synthétique clair comprenant d'une part, un liant synthétique clair comprenant une résine d'origine végétale et une huile d'origine pétrolière, et d'autre part, un latex. L'invention concerne aussi les enduits superficiels et les enrobés bitumineux à froid obtenus à partir de ladite émulsion comme les coulis bitumineux, les enrobés coulés à froid, les graves-émulsion, les bétons bitumineux à froid, et en particulier les enrobés coulés à froid.

L'invention concerne également le procédé de préparation des émulsions aqueuses de liant synthétique clair, le procédé de préparation des enduits superficiels et le procédé de préparation des enrobés bitumineux à froid tels que les enrobés coulés à froid.

L'invention concerne enfin l'utilisation des émulsions aqueuses de liant synthétique clair pour la fabrication d'enduits superficiels et d'enrobés bitumineux à froid tels que les enrobés coulés à froid, pour la fabrication de revêtements colorés.

### CONTEXTE TECHNIQUE

Dans certaines applications routières, notamment dans la voirie urbaine où les sollicitations du trafic sont moins importantes, on utilise en remplacement des bitumes « noirs » traditionnels riches en asphaltènes, des liants synthétiques clairs exempts d'asphaltènes, pour préparer des revêtements colorés. Ces revêtements colorés sont utilisés par exemple pour les trottoirs, les rues piétonnes, les allées de jardins et de parcs, les places publiques, les aires de parking et de repos, les cours d'immeubles et d'écoles, les pistes cyclables, les tunnels. Ces revêtements colorés permettent d'améliorer le cadre de vie d'un point de vue esthétique, ainsi que d'un point de vue sécurité.

### ART ANTERIEUR ET PROBLEME TECHNIQUE

Les liants synthétiques clairs, actuellement disponibles sur le marché, sont pour la plupart d'entre eux, formulés à partir de résine d'origine pétrolière et d'huile d'origine pétrolière.

Dans le brevet européen EP179510, les liants synthétiques clairs sont préparés par mélange d'un extrait d'huile lubrifiante minérale et d'une résine modifiée. Ces résines sont choisies parmi les résines d'origine pétrolière et les résines coumarone-indène d'origine fossile. On peut prévoir l'addition d'un caoutchouc synthétique aux liants synthétiques clairs.

Pour préserver les ressources pétrolières mondiales, on cherche à trouver des produits de substitution au pétrole et à tous ses dérivés.

### RESUME DE L'INVENTION

Dans cette perspective, la société demanderesse a cherché à remplacer une partie des constituants d'origine pétrolière des liants synthétiques clairs par des constituants renouvelables d'origine végétale.

La société demanderesse a établi de façon surprenante, que la substitution d'une résine d'origine pétrolière par une résine d'origine végétale dans une émulsion de liant synthétique clair, permettait d'obtenir une émulsion de liant synthétique clair ayant des propriétés physico-mécaniques équivalentes ou supérieures à celles d'une émulsion de liant synthétique clair entièrement d'origine pétrolière.

A cette fin, l'invention propose une émulsion de liant synthétique clair comprenant un liant synthétique clair à base d'une résine d'origine végétale et d'une huile d'origine pétrolière, ladite émulsion comprenant en outre un latex.

### OBJECTIFS DE L'INVENTION

Un des objectifs de la présente invention est donc de proposer une émulsion de liant synthétique clair formulée, en partie, à partir de matières premières renouvelables, et en particulier à partir d'une résine d'origine végétale.

Un autre objectif de la présente invention est donc de proposer une émulsion de liant synthétique clair formulée, en partie, à partir de matières premières renouvelables, qui présente des propriétés chimiques, physiques et mécaniques équivalentes ou améliorées, notamment en termes de stabilité au cisaillement, par rapport à une émulsion de liant synthétique clair formulée, à partir de matières d'origine pétrolière.

Un autre objectif de la présente invention est donc de proposer une émulsion de liant synthétique clair formulée, en partie, à partir de matières premières renouvelables, pour la fabrication d'enduits superficiels ou d'enrobés à froid, qui présentent des propriétés chimiques, physiques et mécaniques équivalentes ou améliorées par rapport à des enduits superficiels ou des enrobés à froid obtenus à partir d'une émulsion de liant synthétique clair formulée, à partir de matières d'origine pétrolière.

En particulier, un des objectifs de la présente invention est de proposer un enrobé coulé à froid obtenu à partir d'une émulsion de liant synthétique clair formulée, en partie, à partir de matières premières renouvelables, ayant une montée en cohésion rapide, permettant une réouverture au trafic rapide. De préférence l'enrobé selon l'invention présente une vitesse de montée en cohésion mesurée selon la norme NF EN 12274-4 supérieure à 1,1 N.m, de préférence supérieure à 1,3 N.m à 30 minutes.

En particulier, un des objectifs de la présente invention est de proposer un enrobé coulé à froid obtenu à partir d'une émulsion de liant synthétique clair formulée, en partie, à partir de matières premières renouvelables, ayant une bonne tenue mécanique pour résister aux agressions engendrées par les pneumatiques des véhicules. De préférence l'enrobé selon l'invention présente une résistance à l'abrasion mesurée selon la norme NF EN 12274-5 inférieure à 5 %, de préférence inférieure à 1 % ou encore inférieure à 0,5 %.

Ces objectifs, et d'autres, sont atteints par la formulation d'une émulsion aqueuse de liant synthétique clair comprenant :
- un liant synthétique clair comprenant au moins une huile d'origine pétrolière et au moins une résine d'origine végétale,
- et au moins un latex.

De préférence, la résine d'origine végétale est choisie parmi les esters de colophanes, tels que les esters méthyliques de colophanes, les esters du glycérol et de colophanes, les esters du pentaérythritol et de colophanes, pris seuls ou en mélange.

De préférence, l'huile d'origine pétrolière est une huile aromatique comprenant des extraits aromatiques de résidus de pétrole, obtenus par extraction ou désaromatisation de résidus de distillation de coupes pétrolières, en particulier de résidus de distillation sous-vide de coupes pétrolières.

De préférence, l'huile d'origine pétrolière a une teneur en composés aromatiques supérieure à 30 % en poids, de préférence supérieure à 50 % en poids, plus préférentiellement supérieure à 70 % en poids.

De préférence, le latex est choisi parmi les latex de polymères acryliques, les latex de caoutchouc naturel, les latex de caoutchouc synthétiques, tels que les caoutchoucs synthétiques styrène-butadiène-rubber (SBR), pris seuls ou en mélange.

De préférence, le liant synthétique clair comprend de 10 à 70 % en poids de résine d'origine végétale, par rapport au poids de liant synthétique clair, de préférence de 20 à 60 % en poids de résine d'origine végétale, plus préférentiellement de 30 à 50 % en poids de résine d'origine végétale.

De préférence, le liant synthétique clair comprend de 20 à 90 % en poids d'huile d'origine pétrolière, par rapport au poids de liant synthétique clair, de préférence de 30 à 80 % en poids d'huile d'origine pétrolière, plus préférentiellement de 40 à 70 % en poids d'huile d'origine pétrolière.

De préférence, l'émulsion de liant synthétique clair comprend de 30 à 70 % en poids de liant synthétique clair, par rapport au poids d'émulsion de liant synthétique clair, de préférence de 40 à 60 % en poids de liant synthétique clair, plus préférentiellement de 50 à 55 % en poids de liant synthétique clair.

De préférence, l'émulsion de liant synthétique clair comprend de 1 à 20 % en poids de latex, par rapport au poids d'émulsion de liant synthétique clair, de préférence de 3 à 10 % en poids de latex, plus préférentiellement de 5 à 8 % en poids de latex.

De préférence, le liant synthétique clair comprend en outre un polymère.

L'invention concerne aussi le procédé de préparation d'une émulsion de liant synthétique clair telle que définie ci-dessus comprenant :
- (i) la préparation d'un liant synthétique clair par mélange d'au moins une huile d'origine pétrolière et d'au moins une résine d'origine végétale,
- (ii) la préparation d'une solution émulsifiante par mélange d'eau et d'au moins un latex,
- (iii) le mélange du liant clair synthétique de l'étape (i) et de la solution émulsifiante de l'étape (ii).

L'invention concerne aussi un enrobé à froid, en particulier un enrobé coulé à froid, obtenu par mélange de granulats avec une émulsion de liant clair synthétique telle que définie ci-dessus.

L'invention concerne aussi le procédé de préparation d'un enrobé à froid tel que défini ci-dessus, notamment d'un enrobé coulé à froid comprenant :
- (i) la préparation d'un liant clair synthétique par mélange d'au moins une huile d'origine pétrolière et d'au moins une résine d'origine végétale,
- (ii) la préparation d'une solution émulsifiante par mélange d'eau et d'au moins un latex,
- (iii) la dispersion du liant synthétique clair de l'étape (i) dans la solution émulsifiante de l'étape (ii),
- (iv) le mélange de l'émulsion de liant synthétique clair obtenue à l'étape (iii) avec des granulats.

L'invention concerne aussi l'utilisation d'une émulsion de liant synthétique clair telle que définie ci-dessus, pour la préparation de revêtements colorés, choisis parmi les enduits superficiels, les enrobés à froid tels que les coulis bitumineux, les enrobés coulés à froid, les graves-émulsion, les bétons bitumineux à froid, en particulier les enrobés coulés à froid.

### DESCRIPTION DETAILLEE

L'invention concerne une émulsion aqueuse de liant synthétique clair comprenant un liant synthétique clair en dispersion dans de l'eau. L'émulsion de liant synthétique clair selon l'invention comprend aussi au moins un latex en dispersion dans de l'eau. L'émulsion de liant synthétique clair selon l'invention est donc une émulsion biphasique comprenant deux phases dispersées dans de l'eau, la première étant le liant synthétique clair et la deuxième le latex.

Le liant synthétique clair comprend au mois une résine d'origine végétale et au moins une huile d'origine pétrolière.

Les résines convenant pour la présente invention sont des résines d'origine végétale, obtenues à partir de végétaux et/ou de plantes. Elles peuvent être dites de récolte, c'est-à-dire récoltées à partir du végétal vivant. Elles peuvent être utilisées telles quelles, on parle alors de résines naturelles ou être transformées chimiquement, on parle alors de résines naturelles modifiées.

Parmi les résines de récolte, on trouve les résines accroïdes, le dammar, les colophanes naturelles, les colophanes modifiées, les esters de colophane et les résinates métalliques. Celles-ci peuvent être prises seules ou en mélange.

Parmi les colophanes naturelles, on peut citer les colophanes de gemme et de bois, en particulier de pin, et/ou de tall oil. Ces colophanes naturelles peuvent être prises seules ou en mélange.

Parmi les colophanes modifiées, on peut citer les colophanes hydrogénées, les colophanes dismutées, les colophanes polymérisées et/ou les colophanes maléisées. Ces colophanes naturelles modifiées peuvent être prises seules ou en mélange, et subir un ou plusieurs traitement de dismutation, polymérisation et/ou maléisation.

Parmi les esters de colophanes, on peut citer les esters méthyliques de colophanes naturelles, les esters méthyliques de colophanes hydrogénées, les esters du glycérol et de colophanes naturelles, les esters du glycérol et de colophanes hydrogénées, les esters du glycérol et de colophanes dismutées, les esters du glycérol et de colophanes polymérisées, les esters du glycérol et de colophanes maléisées, les esters du pentaérythritol et de colophanes naturelles et les esters du pentaérythritol et de colophanes hydrogénées. Ces esters de colophanes peuvent être pris seuls ou en mélange et provenir de colophanes ayant subi un ou plusieurs traitement de dismutation, polymérisation et/ou maléisation.

Les esters du pentaérythritol et de colophanes naturelles et les esters du pentaérythritol et de colophanes hydrogénées sont les esters de colophanes préférés.

Parmi les résinates métalliques, on peut citer les carboxylates métalliques, par exemple de Ca, Zn, Mg, Ba, Pb, Co, obtenus à partir de colophanes naturelles ou de colophanes modifiées. On préfère les résinates de calcium, les résinates de zinc, les résinates mixtes calcium/zinc, pris seuls ou en mélange.

Pour plus d'informations sur les résines utilisables selon l'invention, on peut se référer à l'article K340 de Bernard Delmond publié dans les « Techniques de l'ingénieur ».

De préférence, les résines selon l'invention ont une température de ramollissement comprise entre 60°C et 200°C, de préférence entre 80°C et 150°C, plus préférentiellement entre 90°C et 110°C, encore plus préférentiellement entre 100°C et 105°C.

De préférence, les résines selon l'invention ont un indice d'acidité compris entre 2 mg KOH/g et 25 mg KOH/g, de préférence entre 5 mg KOH/g et 20 mg KOH/g, plus préférentiellement entre 6 mg KOH/g et 16 mg KOH/g.

De préférence, les résines selon l'invention ont une viscosité à 140°C comprise entre 500 mPa.s et 5000 mPa.s, de préférence entre 1000 mPa.s et 3000 mPa.s, plus préférentiellement entre 2000 mPa.s et 2500 mPa.s.

De préférence, les résines selon l'invention ont une viscosité à 160°C comprise entre 100 mPa.s et 1000 mPa.s, de préférence entre 200 mPa.s et 600 mPa.s, plus préférentiellement entre 300 mPa.s et 500 mPa.s.

De préférence, les résines selon l'invention ont une viscosité à 180°C comprise entre 50 mPa.s et 300 mPa.s, de préférence entre 100 mPa.s et 200 mPa.s, plus préférentiellement entre 120 mPa.s et 150 mPa.s.

Le liant synthétique clair comprend de 10 à 70 % en poids de résine, de préférence de 20 à 60 % en poids de résine, plus préférentiellement de 30 à 50 % en poids de résine, encore plus préférentiellement de 40 à 45 % en poids de résine. Ces pourcentages sont calculés par rapport au poids de liant synthétique clair.

Les huiles convenant pour la présente invention sont des huiles d'origine pétrolière, obtenues à partir de pétrole brut. Ces huiles sont des huiles aromatiques, très riches en composés aromatiques car elles sont obtenues par extraction des composés aromatiques de coupes pétrolières à l'aide d'un solvant.

Ces huiles sont donc constituées d'extraits aromatiques de coupes pétrolières, et en particulier d'extraits aromatiques de résidus de coupes pétrolières, c'est à dire d'extraits aromatiques des résidus de la distillation atmosphérique et/ou d'extraits aromatiques des résidus de la distillation sous-vide, et en particulier d'extraits aromatiques des résidus de la distillation sous-vide.

Les huiles proviennent donc de la désaromatisation (ou extraction) de résidus de la distillation sous-vide de plusieurs coupes pétrolières.

Les solvants utilisés pour extraire les aromatiques des résidus de la distillation sous-vide sont le furfural et/ou la N-méthylpyrrolidone.

Les résidus de coupes pétrolières que l'on désaromatise pour obtenir l'huile sont en particulier des bases lubrifiantes, prises seules ou en mélange.

Les résidus de coupes pétrolières que l'on désaromatise pour obtenir l'huile peuvent aussi avoir subis avant ou après extraction des composés aromatiques, une opération de désasphaltage.

Les huiles selon l'invention sont donc particulièrement riches en composés aromatiques. De préférence, les huiles ont une teneur en composés aromatiques comprise entre 30 % et 95 % en poids, de préférence comprise entre 50 % et 90 % en poids, plus préférentiellement comprise entre 60 % et 85 % (méthode SARA Saturés/Aromatiques/Résines/Asphaltènes).

De préférence, les huiles ont une teneur en composés aromatiques supérieure à 30 % en poids, de préférence supérieure à 50 % en poids, plus préférentiellement supérieure à 70 % en poids, encore plus préférentiellement supérieure à 80 % (méthode SARA Saturés/Aromatiques/Résines/Asphaltènes).

De préférence, les huiles ont une teneur en composés saturés comprise entre 1 % et 20 % en poids, de préférence comprise entre 3 % et 15 % en poids, plus préférentiellement comprise entre 5 % et 10 % (méthode SARA Saturés/Aromatiques/Résines/Asphaltènes).

De préférence, les huiles ont une teneur en composés résiniques comprise entre 1 % et 10 % en poids, de préférence comprise entre 3 % et 5 % en poids (méthode SARA Saturés/Aromatiques/Résines/Asphaltènes).

De préférence, les huiles ont une viscosité cinématique à 100°C comprise entre 10 mm²/s et 120 mm²/s, de préférence comprise entre 20 mm²/s et 100 mm²/s, plus préférentiellement comprise entre 50 mm²/s et 85 mm²/s (EN ISO 3104).

De préférence, les huiles ont une viscosité cinématique à 50°C comprise entre 300 mm²/s et 5000 mm²/s, de préférence comprise entre 500 mm²/s et 4000 mm²/s, plus préférentiellement comprise entre 1000 mm²/s et 2500 mm²/s (EN ISO 3104).

De préférence, les huiles ont un point éclair Cleaveland compris entre 150°C et 600°C, de préférence compris entre 200°C et 400°C, plus préférentiellement compris entre 250°C et 350°C (EN ISO 2592).

De préférence, les huiles ont un point éclair Cleaveland supérieur à 150°C, de préférence supérieure à 200°C, plus préférentiellement supérieur à 250°C, plus préférentiellement supérieur à 300°C (EN ISO 2592).

De préférence, les huiles ont un point aniline compris entre 20°C et 100°C, de préférence compris entre 40°C et 180°C, plus préférentiellement compris entre 50°C et 60°C (NF M 07-021).

De préférence, les huiles ont une masse volumique à 15°C comprise entre 400 kg/m³ et 1500 kg/m³, de préférence comprise entre 600 kg/m³ et 1200 kg/m³, plus préférentiellement comprise entre 800 kg/m³ et 1000 kg/m³ (EN ISO 12185).

De préférence, les huiles ont un point initial de distillation supérieur à 200°C, de préférence supérieur à 250°C, plus préférentiellement supérieur à 300°C. Les huiles sont donc qualifiées d'huiles « lourdes », par opposition aux huiles « légères » dont le point initial de distillation est beaucoup plus bas.

Le liant synthétique clair comprend de 20 à 90 % en poids d'huile, de préférence de 30 à 80 % en poids d'huile, plus préférentiellement de 40 à 70 % en poids d'huile, encore plus préférentiellement de 50 à 60 % en poids d'huile. Ces pourcentages sont calculés par rapport au poids de liant synthétique clair.

Par latex au sens de l'invention, on entend une dispersion aqueuse de polymères naturels ou synthétiques sous la forme de particules extrêmement fines, le plus souvent d'un diamètre inférieur à 1µ.

Les latex convenant pour la présente invention sont choisis parmi les latex de polymères acryliques, les latex de caoutchouc naturel, les latex de caoutchouc synthétiques, pris seuls ou en mélange.

Les latex de caoutchouc naturel proviennent du latex produit par certains arbres en particulier l'Hevea brasiliensis. La structure et la composition chimique du caoutchouc naturel sont celles d'un polyisoprène cis-1,4. Les masses moléculaires sont comprises entre 200 000 et 500 000 g.mol⁻¹.

Les latex de caoutchouc synthétiques sont par exemple des caoutchoucs synthétiques de polychloroprène tels que les polymères de 2-chlore-1,3-butadiène, des caoutchoucs synthétiques de polybutadiène, des caoutchoucs synthétiques de polyisobutylène, des caoutchoucs synthétiques de polyisoprène, des caoutchoucs synthétiques styrène-butadiène-rubber (SBR), des caoutchoucs synthétiques styrène-butadiène-styrène (SBS), des caoutchoucs synthétiques styrène-isoprène-styrène (SIS), pris seuls ou en mélange.

Les latex préférés sont les caoutchoucs synthétiques SBR.

La teneur en solides (ou teneur en matière sèche) du latex est de préférence comprise entre 50 et 80 % en poids, plus préférentiellement comprise entre 60 et 70 % en poids.

La teneur en styrène des latex est de préférence comprise entre 10 et 40 % en poids, plus préférentiellement comprise entre 20 et 30 % en poids.

L'émulsion de liant synthétique clair comprend de 30 à 70 % en poids de liant synthétique clair, de préférence de 40 à 60 % en poids de liant clair synthétique, plus préférentiellement de 50 à 55 % en poids de liant clair synthétique. Ces pourcentages sont calculés par rapport au poids de l'émulsion de liant synthétique clair.

L'émulsion de liant synthétique clair comprend de 1 à 20 % en poids de latex, de préférence de 3 à 10 % en poids de latex, plus préférentiellement de 5 à 8 % en poids de latex. Ces pourcentages sont calculés par rapport au poids de l'émulsion de liant synthétique clair. Compte tenu de la teneur en matière sèche indiquée ci-dessus, l'émulsion de liant synthétique clair comprend de 0,5 à 16 % en poids de matière sèche de latex, de préférence de 3 à 12 % en poids de matière sèche de latex, plus préférentiellement de 5 à 10 % en poids de matière sèche de latex. Ces pourcentages sont calculés par rapport au poids de l'émulsion de liant synthétique clair.

Des polymères peuvent également être ajoutés en plus du latex. Ces polymères pourront être ajoutés au liant synthétique clair, c'est-à-dire en mélange avec l'huile et la résine, avant la mise en émulsion.

L'émulsion comprendra deux types de polymères, ceux en dispersion directe dans l'eau (latex) et ceux dans le liant synthétique clair lui-même en dispersion dans de l'eau. Quand on ajoute au liant synthétique clair des polymères, la teneur en latex dans l'émulsion pourra être diminuée.

Les polymères pourront être choisis parmi les copolymères de type éthylène-acétate de vinyle (EVA), les copolymères de type styrène-butadiène.

Le liant synthétique clair comprend éventuellement de 0,1 à 10 % en poids de polymère, de préférence de 1 à 5 % en poids de polymère, plus préférentiellement de 2 à 3 % en poids de polymère. Ces pourcentages sont calculés par rapport au poids de liant synthétique clair.

L'émulsion de liant synthétique clair pourra également comprendre des émulsifiants (ou tensioactifs). Ceux-ci sont de préférence de nature cationique. Ils sont choisis parmi les dérivés d'alkylamines, les dérivés d'alkylamidopolyamines et les dérivés de sels d'ammonium quaternaire, pris seuls ou en mélange. Les plus utilisés sont les propylènes-diamines de suif, les amido-amines de suif, les ammoniums quaternaires obtenus par quaternisation des propylènes-diamines de suif, les propylènes-polyamines de suif.

De préférence, l'émulsion de liant synthétique clair comprend de 0,1 à 2 % en poids d'émulsifiant, plus préférentiellement de 0,2 à 1 % en poids d'émulsifiant. Ces pourcentages sont calculés par rapport au poids de l'émulsion de liant synthétique clair. De préférence, les émulsifiants sont ajoutés à la solution émulsifiante.

L'émulsion de liant synthétique clair ou le liant synthétique clair pourront également comprendre des dopes d'adhésivité choisis parmi les alkyl-polyamines telles que les alkyl amido-polyamines ou les alkyl imidazo-polyamine. Les dopes d'adhésivité sont ajoutés au liant synthétique clair et/ou dans l'émulsion de liant synthétique clair.

De préférence, le liant synthétique clair comprend de 0,1 à 1% en poids de dope d'adhésivité, plus préférentiellement de 0,2 à 0,5 % en poids de dope d'adhésivité. Ces pourcentages sont calculés par rapport au poids de liant synthétique clair.

On peut aussi ajouter à l'émulsion de liant synthétique clair, des acides. Ces acides sont choisis parmi l'acide chlorhydrique et/ou l'acide phosphorique pris seuls ou en mélange. De préférence, les acides sont ajoutés à la solution émulsifiante.

De préférence, l'émulsion de liant synthétique clair comprend de 0,1 à 5 % en poids d'acide, plus préférentiellement de 0,5 à 2 % en poids d'acide. Ces pourcentages sont calculés par rapport au poids de l'émulsion de liant synthétique clair.

De préférence, l'émulsion de liant synthétique clair comprend de 10 à 60 % en poids d'eau, plus préférentiellement de 20 à 50 % en poids d'eau, encore plus préférentiellement de 30 à 40 % en poids d'eau. Ces pourcentages sont calculés par rapport au poids de l'émulsion de liant synthétique clair. On entend par eau, l'eau ajoutée en plus du latex, l'eau qui comprend les émulsifiants.

Une émulsion de liant clair selon l'invention préférée comprend :
- de 50 à 55 % en poids de liant synthétique clair, par rapport au poids de l'émulsion de liant synthétique clair, le liant synthétique clair comprenant lui-même de 30 à 50 % en poids de résine et de 40 à 70 % en poids d'huile, par rapport au poids de liant synthétique clair, et
- de 45 à 50 % en poids d'une solution émulsifiante, par rapport au poids de l'émulsion de liant synthétique clair, la solution émulsifiante comprenant elle-même de 3 à 10 % en poids de latex, de 0,1 à 2 % en poids d'émulsifiant, de 0,5 à 2 % en poids d'acide et de 30 à 40 % d'eau, par rapport au poids de l'émulsion de liant synthétique clair.

L'invention concerne aussi le procédé de préparation d'une émulsion de liant synthétique clair comprenant les étapes essentielles suivantes :
- (i) la préparation d'un liant synthétique clair par mélange d'au moins une huile d'origine pétrolière et d'au moins une résine d'origine végétale,
- (ii) la préparation d'une solution émulsifiante par mélange d'eau et de latex,
- (iii) la dispersion du liant synthétique clair de l'étape (i) dans la solution émulsifiante de l'étape (ii).

L'étape (i) se fait par mélange à une température comprise entre 80 et 200°C, de préférence entre 120 et 170°C. On peut prévoir également l'addition à l'huile et à la résine d'additifs tels que des dopes d'adhésivité, des tensioactifs et/ou des polymères de type styrène-butadiène.

L'étape (ii) se fait par mélange à une température comprise entre 40 et 100°C, de préférence entre 50 et 70°C. On peut prévoir également l'addition à l'eau et/ou au latex, d'émulsifiants et/ou d'acides.

L'étape (iii) se fait par dispersion, par exemple dans un émulsionneur, à une température comprise entre 60 et 120°C, de préférence entre 80 et 100°C.

L'émulsion de liant synthétique clair selon l'invention est destinée à être utilisée pour la préparation d'enduits superficiels colorés et/ou d'enrobés à froid colorés.

Les enduits superficiels, d'une part, sont préparés à partir de l'émulsion selon l'invention sur laquelle sont posés des granulats. L'émulsion est appliquée sur la surface à revêtir par une répandeuse ; les granulats sont ensuite appliqués par un gravillonneur sur l'émulsion, l'ensemble est enfin compacté.

Les enrobés à froid (ou enrobés bitumineux à froid), d'autre part, sont préparés par mélange (ou malaxage) de granulats avec l'émulsion selon l'invention.

Des exemples d'enrobé à froid, sont les coulis bitumineux, les enrobés coulés à froid, les graves-émulsion, les bétons bitumineux à froid.

Par enrobé coulé à froid (ECF), on entend des matériaux routiers tels que décrits dans la note d'information du Service d'Etudes Techniques des Routes et Autoroutes (SETRA) de la Direction des Routes du Ministère de l'Equipement (Note d'Information Chaussées Dépendances n°102 «Les enrobés coulés à froid » de Juin 1997), ou encore dans les directives éditées en mai 2003 par l'International Slurry Surfacing Association (Annapolis, MD USA). Les ECF seront entendus ici comme toutes les variantes de cette technologie, par exemple les coulis bitumineux (CB) également décrits dans la note du SETRA précitée.

Les bétons bitumineux à froid (BBF) quant à eux, sont définis dans la norme NF P 98-139. Les graves-émulsion sont elles, définies dans la norme NF P 98-121.

Le procédé de préparation des enrobés coulés à froid à partir de l'émulsion de liant synthétique clair selon l'invention, comprend les étapes essentielles suivantes :
- (i) la préparation d'un liant synthétique clair par mélange d'au moins une huile d'origine pétrolière et d'au moins une résine d'origine végétale,
- (ii) la préparation d'une solution émulsifiante par mélange d'eau et d'au moins un latex ,
- (iii) la dispersion du liant synthétique clair de l'étape (i) dans la solution émulsifiante de l'étape (ii), par exemple dans un émulsionneur,
- (iv) le mélange de l'émulsion de liant synthétique clair obtenue à l'étape (iii) avec des granulats.

L'étape (i) se fait par mélange à une température comprise entre 80 et 200°C, de préférence entre 120 et 170°C. On peut prévoir également l'addition à l'huile et à la résine d'additifs tels que des dopes d'adhésivité, des tensioactifs et/ou des polymères de type styrène-butadiène.

L'étape (ii) se fait par mélange à une température comprise entre 40 et 100°C, de préférence entre 50 et 70°C. On peut prévoir également l'addition à l'eau et/ou au latex, d'émulsifiants et/ou d'acides.

L'étape (iii) se fait par dispersion par exemple dans un émulsionneur à une température comprise entre 60 et 120°C, de préférence entre 80 et 100°C.

L'étape (iv) se fait par mélange à température ambiante. On peut prévoir également l'addition à l'étape (iv) d'eau et/ou de chaux.

Les pigments sont sélectionnés suivant la teinte, la couleur, qu'on veut donner aux revêtements. On utilisera par exemple des oxydes métalliques tels que des oxydes de fer, des oxydes de chrome, des oxydes de cobalt, des oxydes de titane pour obtenir les couleurs rouge, jaune, gris, vert, bleu ou blanc. Les pigments pourront être ajoutés dans une ou plusieurs des étapes (i) à (iv) ci-dessus. De préférence, on ajoute les pigments à l'étape (iv).

Les granulats utilisables selon l'invention participent également à la couleur du revêtement désirée. On choisit de préférence des granulats assez clairs.

On peut aussi prévoir l'ajout aux granulats de fines spéciales telles que le ciment ou la chaux.

### EXEMPLES

### Préparation d'un liant synthétique clair selon l'invention L1

Le liant synthétique clair comprend :
- 55,5 % en masse d'huile d'origine pétrolière (huile de nature aromatique),
- 44,3 % en masse de résine d'origine végétale (ester du pentaérythritol et de colophane) et
- 0,2 % en masse de dope d'adhésivité (mélange d'alkyl amido-polyamine et d'alkyl imidazo-polyamine).

Le liant synthétique clair est préparé par mélange à 160°C, pendant une heure, des différents constituants, au bout de laquelle on obtient un mélange homogène.

### Préparation d'une solution émulsifiante selon l'invention SE₁

On prépare une solution émulsifiante en mélangeant à 37,88 parties en masse d'eau, 5 parties en masse de latex de type SBR ayant une teneur en matière sèche entre 63 % et 65 % en masse, par rapport à la masse du latex, 1,1 parties en masse d'émulsifiant (mélange de dichlorure de N-alkyl suif N-diméthyl amino propyl N-triméthyl ammonium et de N-alkyl suif dipropylène triamine) et 1,02 parties en masse d'acide phosphorique. On chauffe la solution émulsifiante à une température voisine de 60°C.

### Préparation d'une émulsion de liant synthétique clair selon l'invention E₁

On prépare l'émulsion de liant synthétique clair en mélangeant 55 % en masse de liant synthétique clair L₁ à 140-150°C et 45 % en masse de solution émulsifiante SE₁_entre 40-50°C. On réalise la dispersion du liant synthétique clair par apport d'énergie mécanique, par exemple dans un moulin colloïdal ou une turbine.

**Tableau 1 - Propriétés de l'émulsion de liant synthétique clair selon l'invention**

| | **Emulsion de liant synthétique clair** |
|---|---|
| **Dépôt sur tamis 500 µm (% poids**)**¹** | 0,18 |
| **Dépôt sur tamis 160 µm (% poids)¹** | 0,06 |
| **pH²** | 2,05 |
| **Rupture fines (g/100g)³** | 193 |

| | |
|---|---|
| - ¹dépôt sur tamis de 500 µm et sur tamis de 160 µm, mesuré selon la norme NF EN 1429. On fait passer pour cela une certaine quantité d'émulsion sur un tamis de 500 µm et sur tamis de 160 µm, on recueille les particules qui ne passent pas à travers le tamis. Cela donne une indication de la qualité de l'émulsion, plus la teneur en particules est faible plus l'émulsion est fine. - ²pH de l'émulsion, mesuré selon la norme NF EN 12850. - ³indice de rupture par méthode des fines minérales, mesuré selon la norme NF EN 13075. L'indice de rupture représente la quantité de fines à apporter pour rompre 100 g d'émulsion. | |

### Préparation de deux liants synthétiques clairs témoins L₂ et L₃

Le liant synthétique clair témoin L₂ comprend :
- 65 % en masse d'huile d'origine pétrolière (huile de nature aromatique),
- 31,8 % en masse de résine d'origine pétrolière à base de motifs coumarone et de motifs indène,
- 0,2 % en masse de dope d'adhésivité (mélange d'alkyl amido-polyamine et d'alkyl imidazo-polyamine),
- 3 % en masse de polymère à base de motifs styrène et de motifs butadiène.

Le liant synthétique clair témoin L₃ comprend :
- 53,8 % en masse d'huile d'origine pétrolière (huile de nature aromatique),
- 43 % en masse de résine d'origine végétale (ester du pentaérythritol et de colophane) et
- 0,2 % en masse de dope d'adhésivité (mélange d'alkyl amido-polyamine et d'alkyl imidazo-polyamine),
- 3 % en masse de polymère à base de motifs styrène et de motifs butadiène.

Les liants synthétiques clairs témoins L₂ et L₃ sont préparés par mélange à 160°C, pendant une heure, des différents constituants, au bout de laquelle on obtient des mélanges homogènes.

### Préparation de deux solutions émulsifiantes témoins SE₂ et SE₃

On prépare une solution émulsifiante témoin SE₂ en mélangeant à 37,88 parties en masse d'eau, 1,1 parties en masse d'émulsifiant (mélange de dichlorure de N-alkyl suif N-diméthyl amino propyl N-triméthyl ammonium et de N-alkyl suif dipropylène triamine) et 1,02 parties en masse d'acide phosphorique. On chauffe la solution émulsifiante à une température voisine de 60°C.

On prépare une solution émulsifiante témoin SE₃ en mélangeant à 37,88 parties en masse d'eau, 1,1 parties en masse d'émulsifiant (mélange de dichlorure de N-alkyl suif N-diméthyl amino propyl N-triméthyl ammonium et de N-alkyl suif dipropylène triamine) et 1,02 parties en masse d'acide phosphorique. On chauffe la solution émulsifiante à une température voisine de 60°C.

### Préparation de deux émulsions de liant synthétique clair témoins E₂ et E₃

On prépare l'émulsion de liant synthétique clair témoin E₂ en mélangeant 60 % en masse de liant synthétique clair L₂ à 140-150°C et 40 % en masse de solution émulsifiante SE₂ entre 40-50°C. On réalise la dispersion du liant synthétique clair par apport d'énergie mécanique, par exemple dans un moulin colloïdal ou une turbine.

On prépare l'émulsion de liant synthétique clair témoin E₃ en mélangeant 60 % en masse de liant synthétique clair L₃ à 140-150°C et 40 % en masse de solution émulsifiante SE₃ entre 40-50°C. On réalise la dispersion du liant synthétique clair par apport d'énergie mécanique, par exemple dans un moulin colloïdal ou une turbine.

La stabilité des émulsions de liant synthétique clair vis-à-vis du cisaillement est évaluée lors de leur passage dans une pompe. En effet, avant d'être appliquées sur la route, les émulsions de liant synthétique clair sont stockées dans des bacs ou dans des camions et doivent ensuite être pompées pour être appliquées sur la route. L'émulsion de liant synthétique clair E₂ n'est pas stable au cisaillement et a rompu dans la pompe contrairement aux émulsions de liant synthétique clair E₁ et E₃ qui sont stables au cisaillement et ne rompent pas dans la pompe.

### Préparation d'un enrobé coulé à froid selon l'invention ECF₁

On prépare un enrobé coulé à froid selon l'invention ECF₁ en mélangeant à température ambiante :
- 100 parties en poids d'un mélange de granulats minéraux de couleur beige,
- 0,5 partie en poids de chaux,
- 2 parties en poids d'oxyde de titane (pigment de couleur blanche),
- 6 parties en poids d'eau,
- 11,5 parties en poids de l'émulsion de liant synthétique clair selon l'invention E₁.

### Préparation d'un enrobé coulé à froid témoin ECF₃

On prépare un enrobé coulé à froid témoin ECF₃ en mélangeant à température ambiante :
- 100 parties en poids d'un mélange de granulats minéraux de couleur beige,
- 0,5 partie en poids de chaux,
- 2 parties en poids d'oxyde de titane (pigment de couleur blanche),
- 6 parties en poids d'eau,
- 11,5 parties en poids de l'émulsion de liant synthétique clair témoin E₃.

### Préparation d'un enrobé coulé à froid témoin ECF₂

Il n'est pas possible de préparer un enrobé coulé à froid ECF₂ à partir de l'émulsion de liant clair synthétique E₂ puisque l'émulsion de liant clair synthétique E₂ n'est pas stable au cisaillement lors de son pompage et rompt dans la pompe.

**Tableau 2 Propriétés de l'enrobé coulé à froid selon l'invention ECF₁ et de l'enrobé coulé à froid témoin ECF₃**

| | **Enrobé coulé à froid ECF₁** | **Enrobé coulé à froid ECF₃** |
|---|---|---|
| **Cohésion à 30 min (N.m)⁴** | 1,4 | 1,1 |
| **Cohésion à 60 min (N.m)⁴** | 1,6 | 1,2 |
| **Cohésion à 90 min (N.m)⁴** | 1,7 | 1,3 |
| **Cohésion à 120 min (N.m)⁴** | 1,8 | 1,4 |
| **Résistance à l'abrasion (%)⁵** | 0,03 | - |

| | | |
|---|---|---|
| - ⁴Vitesse de montée en cohésion, mesurée selon la norme NF EN 12274-4. - ⁵Résistance à l'abrasion, mesurée selon l'essai WTAT (Wet Track Abrasion Test) de la norme NF EN 12274-5. | | |

L'enrobé coulé à froid selon l'invention ECF₁ présente une vitesse de montée en cohésion assurant un temps de prise rapide et donc un délai de remise en circulation relativement court, contrairement à l'enrobé coulé à froid témoin ECF₃ qui présente des valeurs de montée en cohésion beaucoup plus faibles.

L'enrobé coulé à froid selon l'invention présente une perte de masse *très* négligeable lors de l'essai WTAT (perte de masse de 0,03 %). L'enrobé coulé à froid selon l'invention, est donc très résistant à l'abrasion et présente une bonne résistance mécanique.

L'émulsion de liant clair synthétique E₁ selon l'invention est donc stable au cisaillement, et permet d'obtenir un enrobé coulé à froid ECF₁ selon l'invention qui présente une bonne montée en cohésion et une bonne résistance à l'abrasion, contrairement à l'émulsion de liant clair synthétique témoin E₂ qui n'est pas stable au cisaillement et contrairement à l'émulsion de liant clair synthétique témoin E₃ qui bien que stable au cisaillement ne conduit pas un enrobé coulé à froid témoin ECF₃ ayant une bonne montée en cohésion.

## Revendications

1. Emulsion aqueuse de liant synthétique clair comprenant :
- un liant synthétique clair comprenant au moins une huile d'origine pétrolière et au moins une résine d'origine végétale,
- et au moins un latex.

2. Emulsion de liant synthétique clair selon la revendication 1 dans laquelle la résine d'origine végétale est choisie parmi les esters de colophanes, tels que les esters méthyliques de colophanes, les esters du glycérol et de colophanes, les esters du pentaérythritol et de colophanes, pris seuls ou en mélange.

3. Emulsion de liant synthétique clair selon la revendication 1 ou 2 dans laquelle l'huile d'origine pétrolière est une huile aromatique comprenant des extraits aromatiques de résidus de pétrole, obtenus par extraction ou désaromatisation de résidus de distillation de coupes pétrolières, en particulier de résidus de distillation sous-vide de coupes pétrolières.

4. Emulsion de liant synthétique clair selon l'une quelconque des revendications 1 à 3 dans laquelle l'huile d'origine pétrolière a une teneur en composés aromatiques supérieure à 30 % en poids, de préférence supérieure à 50 % en poids, plus préférentiellement supérieure à 70 % en poids.

5. Emulsion de liant synthétique clair selon l'une quelconque des revendications 1 à 4 dans laquelle le latex est choisi parmi les latex de polymères acryliques, les latex de caoutchouc naturel, les latex de caoutchouc synthétiques, tels que les caoutchoucs synthétiques styrène-butadiène-rubber (SBR), pris seuls ou en mélange.

6. Emulsion de liant synthétique clair selon l'une quelconque des revendications 1 à 5 dans laquelle le liant synthétique clair comprend de 10 à 70 % en poids de résine d'origine végétale, par rapport au poids de liant synthétique clair, de préférence de 20 à 60 % en poids de résine d'origine végétale, plus préférentiellement de 30 à 50 % en poids de résine d'origine végétale.

7. Emulsion de liant synthétique clair selon l'une quelconque des revendications 1 à 6 dans laquelle le liant synthétique clair comprend de 20 à 90 % en poids d'huile d'origine pétrolière, par rapport au poids de liant synthétique clair, de préférence de 30 à 80 % en poids d'huile d'origine pétrolière, plus préférentiellement de 40 à 70 % en poids d'huile d'origine pétrolière.

8. Emulsion de liant synthétique clair selon l'une quelconque des revendications 1 à 7 comprenant de 30 à 70 % en poids de liant synthétique clair, par rapport au poids d'émulsion de liant synthétique clair, de préférence de 40 à 60 % en poids de liant synthétique clair, plus préférentiellement de 50 à 55 % en poids de liant synthétique clair.

9. Emulsion de liant synthétique clair selon l'une quelconque des revendications 1 à 8 comprenant de 1 à 20 % en poids de latex, par rapport au poids d'émulsion de liant synthétique clair, de préférence de 3 à 10% en poids de latex, plus préférentiellement de 5 à 8 % en poids de latex.

10. Emulsion de liant synthétique clair selon l'une quelconque des revendications 1 à 9 dans laquelle le liant synthétique clair comprend en outre un polymère.

11. Procédé de préparation d'une émulsion de liant synthétique clair selon l'une quelconque des revendications 1 à 10 comprenant :
- (i) la préparation d'un liant synthétique clair par mélange d'au moins une huile d'origine pétrolière et d'au moins une résine d'origine végétale,
- (ii) la préparation d'une solution émulsifiante par mélange d'eau et d'au moins un latex,
- (iii) la dispersion du liant synthétique clair de l'étape (i) dans la solution émulsifiante de l'étape (ii).

12. Enrobé à froid, en particulier enrobé coulé à froid, obtenu par mélange de granulats avec une émulsion de liant synthétique clair selon l'une quelconque des revendications 1 à 10.

13. Procédé de préparation d'un enrobé à froid selon la revendication 12, notamment d'un enrobé coulé à froid comprenant :
- (i) la préparation d'un liant synthétique clair par mélange d'au moins une huile d'origine pétrolière et d'au moins une résine d'origine végétale,
- (ii) la préparation d'une solution émulsifiante par mélange d'eau et d'au moins un latex,
- (iii) la dispersion du liant synthétique clair de l'étape (i) dans la solution émulsifiante de l'étape (ii),
- (iv) le mélange de l'émulsion de liant synthétique clair obtenue à l'étape (iii) avec des granulats.

14. Utilisation d'une émulsion de liant synthétique clair selon l'une quelconque des revendications 1 à 10, pour la préparation de revêtements colorés, choisis parmi les enduits superficiels, les enrobés à froid tels que les coulis bitumineux, les enrobés coulés à froid, les graves-émulsion, les bétons bitumineux à froid, en particulier les enrobés coulés à froid.

## Patentansprüche

1. Wässrige Emulsion eines klaren synthetischen Bindemittels, umfassend:
- ein klares synthetisches Bindemittel, das mindestens ein Öl mineralölischen Ursprungs und mindestens ein Harz pflanzlichen Ursprungs umfasst,
- und mindestens einen Latex.

2. Emulsion eines klaren synthetischen Bindemittels nach Anspruch 1, wobei das Harz pflanzlichen Ursprungs unter den Kolophoniumestern wie beispielsweise den Kolophonium-Methylestern, den Glycerin-Kolophonium-Estern, den Pentaerythrit-Kolophonium-Estern, allein oder gemischt, gewählt wird.

3. Emulsion eines klaren synthetischen Bindemittels nach Anspruch 1 oder 2, wobei das Öl mineralölischen Ursprungs ein aromatisches Öl ist, das aromatische Extrakte aus Mineralrückständen enthält, die durch Extraktion oder Dearomatisierung von Destillationsrück-ständen von Mineralölfraktionen, insbesondere Vakuumdestillationsrückständen von Mineralölfraktionen, erhalten werden.

4. Emulsion eines klaren synthetischen Bindemittels nach einem beliebigen der Ansprüche 1 bis 3, wobei das Öl mineralölischen Ursprungs einen Gehalt an aromatischen Verbindungen von mehr als 30 Gew.-%, bevorzugt mehr als 50 Gew.-%, noch bevorzugter mehr als 70 Gew.-%, hat.

5. Emulsion eines klaren synthetischen Bindemittels nach einem beliebigen der Ansprüche 1 bis 4, wobei der Latex unter den Acrylpolymerlatexen, den Naturkautschuklatexen, den Synthesekautschuklatexen wie beispielsweise den synthetischen Styrol-Butadien-Kautschuken (SBR), allein oder gemischt, gewählt wird.

6. Emulsion eines klaren synthetischen Bindemittels nach einem beliebigen der Ansprüche 1 bis 5, wobei das klare synthetische Bindemittel 10 bis 70 Gew.-% eines Harzes pflanzlichen Ursprungs, bezogen auf das Gewicht des klaren synthetischen Bindemittels, bevorzugt 20 bis 60 Gew.-% eines Harzes pflanzlichen Ursprungs, noch bevorzugter 30 bis 50 Gew.-% eines Harzes pflanzlichen Ursprungs, umfasst.

7. Emulsion eines klaren synthetischen Bindemittels nach einem beliebigen der Ansprüche 1 bis 6, wobei das klare synthetische Bindemittel 20 bis 90 Gew.-% eines Öls mineralölischen Ursprungs, bezogen auf das Gewicht des klaren synthetischen Bindemittels, bevorzugt 30 bis 80 Gew.-% eines Öls mineralölischen Ursprungs, noch bevorzugter 40 bis 70 Gew.-% eines Öls mineralölischen Ursprungs, umfasst.

8. Emulsion eines klaren synthetischen Bindemittels nach einem beliebigen der Ansprüche 1 bis 7, die 30 bis 70 Gew.-% eines klaren synthetischen Bindemittels, bezogen auf das Gewicht der Emulsion des klaren synthetischen Bindemittels, bevorzugt 40 bis 60 Gew.-% eines klaren synthetischen Bindemittels, noch bevorzugter 50 bis 55 Gew.-% eines klaren synthetischen Bindemittels, umfasst.

9. Emulsion eines klaren synthetischen Bindemittels nach einem beliebigen der Ansprüche 1 bis 8, die 1 bis 20 Gew.-% Latex, bezogen auf das Gewicht der Emulsion des klaren synthetischen Bindemittels, bevorzugt 3 bis 10 Gew.-% Latex, noch bevorzugter 5 bis 8 Gew.-% Latex, umfasst.

10. Emulsion eines klaren synthetischen Bindemittels nach einem beliebigen der Ansprüche 1 bis 9, wobei das klare synthetische Bindemittel darüber hinaus ein Polymer umfasst.

11. Verfahren zur Zubereitung einer Emulsion eines klaren synthetischen Bindemittels nach einem beliebigen der Ansprüche 1 bis 10, umfassend:
(i) die Zubereitung eines klaren synthetischen Bindemittels durch Mischen mindestens eines Öls mineralölischen Ursprungs und mindestens eines Harzes pflanzlichen Ursprungs,
(ii) die Zubereitung einer emulgierenden Lösung durch Mischen von Wasser und mindestens einem Latex,
(iii) die Dispersion des klaren synthetischen Bindemittels aus Schritt (i) in der emulgierenden Lösung aus Schritt (ii).

12. Kaltmischgut, insbesondere Kalteinbaumischgut, erhalten durch Mischen von Splitt mit einer Emulsion eines klaren synthetischen Bindemittels nach einem beliebigen der Ansprüche 1 bis 10.

13. Verfahren zur Zubereitung eines Kaltmischguts nach Anspruch 12, insbesondere eines Kalteinbau-mischguts, umfassend:
(i) die Zubereitung eines klaren synthetischen Bindemittels durch Mischen mindestens eines Öls mineralölischen Ursprungs und mindestens eines Harzes pflanzlichen Ursprungs,
(ii) die Zubereitung einer emulgierenden Lösung durch Mischen von Wasser und mindestens einem Latex,
(iii) die Dispersion des klaren synthetischen Bindemittels aus Schritt (i) in der emulgierenden Lösung aus Schritt (ii),
(iv) das Mischen der in Schritt (iii) erhaltenen Emulsion eines klaren synthetischen Bindemittels mit Splitt.

14. Verwendung einer Emulsion eines klaren synthetischen Bindemittels nach einem beliebigen der Ansprüche 1 bis 10 zur Zubereitung von farbigen Belägen, die unter Oberflächenbeschichtungen, Kaltmischgut wie beispielsweise Bitumenschlämmen, Kalteinbaumischgut, Kiesemulsionen, Kalteinbauasphaltbetonen, insbesondere Kalteinbaumischgut, gewählt werden.

## Claims

1. An aqueous emulsion of clear synthetic binder comprising:
- a clear synthetic binder comprising at least one oil of petroleum origin and at least one resin of vegetable origin,
- and at least one latex.

2. The emulsion of clear synthetic binder according to claim 1 wherein the resin of vegetable origin is chosen from rosin esters, such as methyl rosin esters, glycerol rosin esters, esters of pentaerythritol and rosin, taken alone or in mixture.

3. The emulsion of clear synthetic binder according to claim 1 or 2 wherein the oil of petroleum origin is an aromatic oil comprising aromatic extracts of petroleum residues, obtained by extraction or dearomatization of distillation residues of petroleum fractions, particularly vacuum distillation residues from petroleum fractions.

4. The emulsion of clear synthetic binder according to any one of claims 1 to 3 wherein the oil of petroleum origin has an aromatic content greater than 30% by weight, preferably greater than 50% by weight, more preferably greater than 70% by weight.

5. The emulsion of clear synthetic binder according to any one of claims 1 to 4 wherein the latex is selected from latexes of acrylic polymers, natural rubber latex, synthetic rubber latex, synthetic rubbers such as styrene-butadiene rubber (SBR), taken alone or in mixture.

6. The emulsion of clear synthetic binder according to any one of claims 1 to 5 wherein the clear synthetic binder comprises from 10 to 70% by weight of resin of vegetable origin, based on the weight of clear synthetic binder, preferably 20 to 60% by weight of resin of vegetable origin, more preferably from 30 to 50% by weight of resin of vegetable origin.

7. The emulsion of clear synthetic binder according to any one of claims 1 to 6 wherein the clear synthetic binder comprises 20 to 90% by weight of oil of petroleum origin, based on the weight of clear synthetic binder, preferably 30 to 80% by weight of oil of petroleum origin, more preferably from 40 to 70% by weight of oil of petroleum origin.

8. The emulsion of clear synthetic binder according to any one of claims 1 to 7 comprising 30 to 70% by weight of clear synthetic binder, based on the weight of emulsion of clear synthetic binder, preferably 40 to 60% by weight of clear synthetic binder, more preferably from 50 to 55% by weight of clear synthetic binder.

9. The emulsion of clear synthetic binder according to any one of claims 1 to 8 comprising from 1 to 20% by weight of latex, based on the weight of emulsion of clear synthetic binder, preferably 3 to 10% by weight of latex, more preferably from 5 to 8% by weight of latex.

10. The emulsion of clear synthetic binder according to any one of claims 1 to 9 wherein the clear synthetic binder further comprises a polymer.

11. A method for preparing a clear synthetic binder emulsion according to any one of claims 1 to 10 comprising:
- (i) preparing a clear synthetic binder by mixing at least one oil of petroleum origin and at least one resin of vegetable origin,
- (ii) preparing an emulsifying solution by mixing water and at least one latex,
- (iii) dispersing the clear synthetic binder of step (i) in the emulsifying solution of step (ii).

12. A cold mix, in particular a cold-poured mix, obtained by mixing aggregates with a clear synthetic binder emulsion according to any one of claims 1 to 10.

13. A process for preparing a cold mix of claim 12, in particular a cold-poured mix comprising:
- (i) preparing a clear synthetic binder by mixing at least one oil of petroleum origin and at least one resin of vegetable origin,
- (ii) preparing an emulsifying solution by mixing water and at least one latex,
- (iii) dispersing the clear synthetic binder of step (i) in the emulsifying solution of step (ii),
- (iv) mixing the clear synthetic binder emulsion obtained in step (iii) with aggregates.

14. Use of a clear synthetic binder emulsion according to any one of claims 1 to 10 for the preparation of coloured coatings selected from surface coatings, cold mixes such as bituminous slurry seals, cold-poured mixes, gravel emulsions, cold bituminous concretes, in particular cold-poured mixes.
